# EUROPÄISCHE PATENTSCHRIFT

(11) **EP 1 899 621 B1**
(45) Veröffentlichungstag und Bekanntmachung des Hinweises auf die Patenterteilung: **16.03.2011**
(21) Anmeldenummer: 06753291.1
(22) Anmeldetag: 27.06.2006
(51) Int. Cl.: F16F 15/123, F16H 55/36

(54) **ANORDNUNG ZUM DÄMPFEN VON SCHWINGUNGEN AN EINEM TRIEBRAD SOWIE TRIEBRAD FÜR EINEN NEBENAGGREGATEZUG EINES VERBRENNUNGSMOTORS**
ARRANGEMENT FOR DAMPING VIBRATIONS ON A DRIVING WHEEL AND DRIVING WHEEL FOR AN ANCILLARY UNIT PULLEY OF AN INTERNAL COMBUSTION ENGINE
SYSTEME POUR AMORTIR LES VIBRATIONS AU NIVEAU D'UNE ROUE MOTRICE ET ROUE MOTRICE POUR TRAIN DE SOUS-GROUPES DE MOTEUR A COMBUSTION INTERNE

(30) Priorität: 29.06.2005 DE 102005030188; 10.12.2005 DE 102005059030
(43) Veröffentlichungstag der Anmeldung: 19.03.2008
(73) Patentinhaber: Schaeffler Technologies GmbH & Co. KG, 91074 Herzogenaurach (DE)
(72) Erfinder: LEHMANN, Steffen, 76275 Ettlingen (DE); STIEF, Hermann, 91448 Emskirchen (DE); WALTER, Ralf, 52078 Aachen (DE)
(86) Internationale Anmeldenummer: PCT/DE2006/001101
(87) Internationale Veröffentlichungsnummer: WO 2007/000152

(56) Entgegenhaltungen:
- DE-A1- 4 225 304
- DE-A1- 4 420 178
- DE-A1- 19 652 730
- DE-A1- 19 919 449

## Beschreibung

Die vorliegende Erfindung betrifft eine Anordnung zum Dämpfen von Schwingungen an einem Triebrad zum Antreiben eines Nebenaggregats eines Fahrzeuges mit einer Dämpfungseinrichtung an dem auf einer Nabe gelagerten Triebrad, wobei die Nabe mit der Antriebswelle des Nebenaggregats verbunden ist, und wobei als Dämpfungseinrichtung ein mit einer Rutschkupplung kombinierter Torsionsschwingungsdämpfer vorgesehen ist.Die Erfindung betrifft weiterhin ein Triebrad eines Nebenaggregatezugs eines Verbrennungsmotors, mit einem mit einem Zugmittel in Wirkverbindung stehenden Laufmantel, mit einer mit der Antriebsachse eines Nebenaggregates drehfest verbundenen Nabe, und mit einer zwischen dem Laufmantel und der Nabe wirksam angeordneten Dämpfungseinrichtung zur Verminderung von Drehschwingungen (s. zum Beispiel die DE 42 25 304 A1, dem oberbegriff des unabhängigen Anspruchs 1 bzw. 17 entsprechend).

Aus der Druckschrift DE 195 35 889 A1 ist eine Vorrichtung zur Dämpfung von Schwingungen in einem Zugmitteltrieb bekannt. Der Zugmitteltrieb ist für einen Aggregatriementrieb einer Brennkraftmaschine vorgesehen, wobei eine Freilaufkupplung vorgesehen ist, die zwischen einer Riemenscheibe und einer Welle angeordnet ist. Die bekannte Freilaufeinheit eignet sich besonders zum Antrieb eines Generators. Die Freilaufeinheit ist Bestandteil einer Riemenscheibe, welche zum Antrieb des Generators dient. Durch den Einsatz der Freilaufeinheit wird eine Eigendämpfung ermöglicht, so dass die Drehmomentübertragung des Zugmitteltriebes verbessert wird.

Aus der Druckschrift EP 0 980 479 B1 ist ein weiteres Riemenantriebssystem mit einer Generatorverbindungsfreilaufkupplung bekannt. Das Antriebssystem schafft eine Torsionswickelfeder und einen Einweg-Kupplungsmechanismus, so dass der geschaffene Mechanismus in Form einer schraubenförmigen Wicklung eine Doppelfunktion hat. Zum einen können die Antriebsdrehmomente der Generator-Riemenscheibe auf die Nabe nachgiebig übertragen werden und zum anderen kann die Riemenscheibe des Generators von der Nabe in eine Richtung abgekoppelt werden.

In der Fahrzeugtechnik werden Riementriebe z. B. zum Antrieb der Nebenaggregate, wie z. B. eines Generators, einer Wasserpumpe, eines Klimakompressors, einer Lenkhilfpumpe oder dergleichen, bei einem Verbrennungsmotor eines Fahrzeuges verwendet. Aufgrund der Drehungleichförmigkeiten des Kurbeltriebes des Verbrennungsmotors können hohe Belastungen von dem Riementrieb auf das Nebenaggregat übertragen werden. Diese Belastungen sind abhängig von der Höhe der Anregungsamplitude, der Steifigkeiten von Riemen und Riemenspanner und den Massenträgheitsmomenten der Nebenaggregate, wobei das Massenträgheitsmoment von der Lichtmaschine bzw. dem Generator einen relativ hohen Anteil am Gesamtmassenträgheitsmoment besitzt. Deshalb ist es erforderlich, das Nebenaggregat von dem Riementrieb zu entkoppeln.Als Kolbenmotoren ausgebildete Verbrennungsmotoren weisen bekanntlich an ihrer Kurbelwelle bauart- und betriebsbedingt auftretende Drehschwankungen auf, die jeweils der mittleren Drehgeschwindigkeit überlagert sind. Diese Drehschwankungen werden jeweils durch die ungleichförmige Kraftentfaltung in den einzelnen Zylindern und durch freie Massenmomente des Kurbeltriebs hervorgerufen, wobei deren Amplituden und Frequenzen von der Anzahl der Zylinder, der Anordnung der Zylinder, wie Reihen-, V-, oder Boxeranordnung, der Betriebsart, wie Benzin- oder Dieselbetrieb und der Drehzahl abhängig sind. Durch die Drehschwankungen der Kurbelwelle werden unerwünschte Drehschwingungen sowohl in einen an den Verbrennungsmotor angekoppelten Antriebsstrang als auch in einen unmittelbar an dem Verbrennungsmotor angeordneten Nebenaggregatezug übertragen.

Zur Verminderung der Auswirkungen der Drehschwingungen der Kurbelwelle von Kolbenmotoren ist es bekannt, die Verbrennungsmotoren jeweils mit mindestens einer von der Kurbelwelle angetriebenen Ausgleichswelle und/oder mit einem an der Kurbelwelle angeordneten Zweimassenschwungrad oder mit einem in das Schwungrad integrierten Starter-Generator mit elektromagnetischer Schwingungsdämpfungsfunktion zu versehen. Derartige Einrichtungen sind jedoch sehr aufwendig und entsprechend teuer, und sie vergrößern nachteilig das Gewicht sowie die Baugröße des Verbrennungsmotors. Im Übrigen können die Drehungleichförmigkeiten der Kurbelwelle damit nicht vollständig beseitigt sondern nur abgeschwächt werden.

Zur Vermeidung unerwünschter Drehschwingungen innerhalb eines Nebenaggregatezugs eines Verbrennungsmotors sind daher auch dort Einrichtungen zu deren Verminderung beziehungsweise Dämpfung zweckmäßig und teilweise sogar zwingend erforderlich. Hierzu kann eine Dämpfungseinrichtung zur Verringerung von Drehschwingungen an dem kurbelwellenseitigen Triebrad, an einer Spannvorrichtung des Zugmittels und/oder an dem Triebrad eines Nebenaggregates, wie dem eines Generators, einer Servopumpe einer Servolenkung und/oder eines Klimakompressors einer Klimaanlage, angeordnet sein.

In der DE 196 62 730 A1 ist ein für die Anordnung an einer Kurbelwelle vorgesehenes Triebrad eines Nebenaggregatezugs beschrieben, dessen Dämpfungseinrichtung einen Federspeicher, einen Reibungsdämpfer und einen Schwingungstilger umfasst. Durch die Verwendung eines derartigen Triebrades wird zwar den Drehschwingungen des betreffenden Nebenaggregatezugs schon an der Quelle, nämlich an dem Triebrad der Kurbelwelle, entgegengewirkt. Durch die Anordnung der Komponenten - die Bauteile des Reibungsdämpfers und des Schwingungstilgers sind axial gestaffelt und radial außerhalb der Bauteile des Federspeichers angeordnet - ergibt sich jedoch nachteilig ein relativ großer Durchmesser des Triebrades. Auch ist das Triebrad vergleichsweise kompliziert aufgebaut und besteht daher aus vielen Einzelteilen, wodurch der Herstellungsaufwand ungünstig hoch ist.

Durch Drehschwingungen der Kurbelwelle verursachte Geschwindigkeits-, Zugspannung- und Längenschwankungen des Zugmittels eines Nebenaggregatezugs können zumindest teilweise auch durch Spannvorrichtungen ausgeglichen und gedämpft werden. Derartige Spannvorrichtungen sind in unterschiedlicher Ausführung und Anordnung, insbesondere mit hydraulischen Spannelementen, bekannt. Diese Spannvorrichtungen sind aber zumeist relativ kompliziert aufgebaut und erfordern einen großen Bauraum, der aufgrund der Enge im Motorraum und der Vielzahl von Nebenaggregaten in modernen Kraftfahrzeugen zumeist nicht zur Verfügung steht.

Es ist daher häufig unumgänglich, auch die Triebräder der Nebenaggregate jeweils mit einer Dämpfungseinrichtung zur Verminderung von Drehschwingungen zu versehen. Dies trifft insbesondere für das Triebrad des Generators zu, der ein relativ großes Trägheitsmoment aufweist und somit den Drehschwankungen der Kurbelwelle beziehungsweise den Zug- und Geschwindigkeitsschwankungen des Zugmittels nicht immer folgen kann, welches bei einem Riementrieb zu einem Durchrutschen des Zugmittels, verbunden mit Verschleiß und unangenehmen Geräuschen, führen kann.

Ein erstes zur Verwendung an einem Nebenaggregat vorgesehenes Triebrad mit einer Dämpfungseinrichtung ist aus der DE 101 51 795 A1 bekannt. Bei diesem Triebrad ist dessen Laufmantel auf einer Nabe wälzgelagert, und die Dämpfungseinrichtung umfasst eine zwischen dem Laufmantel und der Nabe angeordnete Freilaufkupplung sowie eine parallel dazu wirksam angeordnete Rutschkupplung. Durch die Freilaufkupplung wird die Nabe bei einer antriebsbedingten Verzögerung des Laufmantels von dieser entkoppelt, wobei die Rutschkupplung bewirkt, dass dies nur bei Überschreitung eines voreingestellten Grenzdrehmomentes erfolgt. Kleinere Drehzahl- und Drehmomentschwankungen werden somit ungedämpft von dem Zugmittel über das Triebrad auf das Nebenaggregat übertragen. Bei größeren Drehmomentschwankungen erfolgt die Abkopplung nur einseitig bei einer relativen Verzögerung des Laufmantels gegenüber der Nabe, wogegen bei einer relativen Beschleunigung des Laufmantels eine ungedämpfte Übertragung der Drehbewegung durch die dann geschlossene Freilaufkupplung erfolgt. Durch das kurzzeitige harte Schließen der Freilaufkupplung wird nachteilig eine Lastspitze erzeugt, die ebenfalls zu einer Anregung von Drehmoment-und Drehzahlschwingungen führen kann.

Ein weiteres derartiges Triebrad ist in der Patentschrift US 6,083,130 beschrieben. Bei diesem bekannten Triebrad ist der Laufmantel ebenfalls auf der Nabe wälzgelagert. Die Dämpfungseinrichtung wird jedoch nunmehr durch eine serielle Anordnung einer Freilaufkupplung und eines Federspeichers gebildet. Der Federspeicher kann wahlweise als Schraubenfeder oder als Spiralfeder ausgebildet sein und ist jeweils zwischen der an dem Laufmantel angeordneten Freilaufkupplung und der Nabe wirksam angeordnet. Durch die Freilaufkupplung wird die Nabe bei verzögertem Laufmantel von diesem entkoppelt, wobei durch das plötzliche Aus- und Einkuppeln der Freilaufkupplung entstehende Lastspitzen durch den Federspeicher gedämpft werden. Bei einem Bruch des Federspeichers ist allerdings die Kraftübertragung unterbrochen, so dass das zugeordnete Nebenaggregat dann nicht mehr angetrieben wird.

Neben der weitgehend einseitigen Wirksamkeit der Schwingungsdämpfung durch die jeweils verwendete Freilaufkupplung und deren stoßartigem Ein- und Auskupplungsverhalten weisen beide bekannten Triebräder den Nachteil eines relativ aufwendigen und bauraumintensiven Aufbaus auf.

Der vorliegenden Erfindung lag die Aufgabe zugrunde, eine Anordnung zum Dämpfen von Schwingungen der eingangs genannten Gattung vorzuschlagen, bei der die Dämpfungseigenschaften weiter verbessert werden, und welche besonders einfach aufgebaut und kostengünstig herstellbar ist.

*Der vorliegenden Erfindung lag auch die Aufgabe zugrunde, ein einem Nebenaggregat zugeordnetes Triebrad der eingangs genannten Art vorzuschlagen, welches bei einfachem und Platz sparendem Aufbau eine verbesserte Dämpfung von Drehschwingungen in Verbindung mit einer erhöhten Betriebssicherheit aufweist.

Diese Aufgaben werden durch eine Anordnung zum Dämpfen von Schwingungen mit einer Dämpfungseinrichtung an einem auf einer Nabe gelagerten Triebrad gemäß Anspruch 1 sowie ein Triebrad gemäβ Anspruch 17 gelöst. Dabei ist die Nabe mit der Antriebswelle eines Nebenaggregats verbunden und als Dämpfungseinrichtung ein mit einer Rutschkupplung kombinierter Torsionsschwingungsdämpfer vorgesehen. Erfindungsgemäß bilden das Triebrad und der Dämpferkäfig des Torsionsschwingungsdämpfers einen Aufnahmebereich für die Federelemente des Torsionsschwingungsdämpfers, wobei der Dämpferkäfig mit der Nabe kraftschlüssig und/oder formschlüssig gekoppelt ist, so dass eine vorbestimmte schwingungsfreie Drehmomentübertragung vom Triebrad über den Dämpferkäfig auf die Nabe vorgesehen ist.

Demnach wird bei der erfindungsgemäßen Anordnung durch Einbringen einer zusätzlichen Federsteifigkeit die Haupteigenfrequenz des Systems derart beeinflusst, dass ein Verschieben der Resonanzstellen zu niedrigen Drehzahlen, möglichst unterhalb der Leerlaufdrehzahl, realisiert wird. Auf diese Weise wird sowohl der überkritische Bereich, bei dem eine möglichst gute Isolation und eine möglichst geringe Dämpfung gefordert wird, als auch der Resonanzbereich mit der erfindungsgemäßen Anordnung optimal abgedeckt, wobei der Resonanzbereich zur Vermeidung hoher Schwingungsamplituden eine möglichst hohe Dämpfung erfordert.

Die erfindungsgemäße Anordnung realisiert eine vorteilhafte Kombination eines Torsionsschwingungsdämpfers mit niedriger Dämpfung und einer z. B. in beide Drehrichtungen des Triebrades wirkenden Rutschkupplung, welche bei hohen Schwingungsamplituden wirkt, so dass sowohl der überkritische Bereich als auch der Resonanzbereich durch die erfindungsgemäße Anordnung optimal abgedeckt wird.

Im Rahmen einer vorteilhaften Ausgestaltung der vorliegenden Erfindung kann vorgesehen sein, dass als Torsionsschwingungsdämpfer ein ohne Schmiermittel arbeitender Bogenfederdämpfer vorgesehen ist, wobei der Verdrehwinkel der Bogenfedern des Bogenfederdämpfers durch Anschläge begrenzt ist. Es ist auch denkbar, dass andere Torsionsschwingungsdämpfer verwendet werden. Der Einsatz eines Bogenfederdämpfers hat sich als besonders vorteilhaft erwiesen, wobei der Bogenfederdämpfer mehrere in Umfangsrichtung komprimierbare Bogenfedern aufweist.

Gemäß einer Weiterbildung ist der Dämpferkäfig des Bogenfederdämpfers als ein in zumindest eine Drehrichtung des Triebrades wirkendes Rutschkupplungselement zum Aufnehmen von Schwingungsamplituden bei der Drehmomentübertragung ausgebildet. Somit dient der Dämpferkäfig als Überlast Rutschkupplungselement und kann vorzugsweise in beide Drehrichtungen des Triebrades wirken, so dass jeweils wirkende Schwingungsamplituden bei der Drehmomentübertragung nicht an die Nabe bzw. an das Nebenaggregat weitergegeben bzw. übertragen werden.

Um eine kraftschlüssige Drehmomentübertragung zu erreichen, ist gemäß der vorliegenden Erfindung vorgesehen, dass der Dämpferkäfig axial über eine erste Reibfläche gegen die Nabe zur kraftschlüssigen Drehmomentübertragung angepresst wird. Gemäβ einer weiterbildung der Erfindung erfolgt dies über eine Tellerfeder oder dergleichen mit der ersten Reibfläche gegen eine zweite Reibfläche der Nabe, wobei die Tellerfeder drehfest mit der Nabe verbunden ist. Durch die z. B. formschlüssig mit der Nabe drehfest verbundene Tellerfeder kann eine in axialer Richtung vorbestimmte Anpresskraft auf den Dämpferkäfig aufgebracht werden, so dass der Dämpferkäfig kraftschlüssig über die beiden Reibflächen mit der Nabe verbunden ist. Somit kann eine Drehmomentübertragung bei Normallast von dem Triebrad über den Dämpferkäfig auf die Nabe erfolgen. Bei Überschreitung der Normallast wird die kraftschlüssige Verbindung gelöst und somit das Triebrad von der Nabe entkoppelt, so dass z. B. Schwingungsamplituden nicht auf das Nebenaggregat bzw. auf die Nabe übertragen werden.

Vorzugsweise kann zwischen der Tellerfeder und dem Dämpferkäfig in axialer Richtung ein Reibring als erste Reibfläche vorgesehen sein. Dadurch können die Eigenschaften des Rutschkupplungselements weiter verbessert werden. Es ist möglich, dass der Reibring lose oder auch formschlüssig an dem Dämpferkäfig angeordnet ist. Des Weiteren kann der Reibring auch fest mit dem Dämpferkäfig verbunden sein, beispielsweise dadurch, dass der Reibring auf den Dämpferkäfig aufgespritzt ist.

Die zweite Reibfläche zur kraftschlüssigen Drehmomentübertragung ist erfindungsgemäß als Kegelfläche ausgebildet sein. Es sind auch andere Formen, wie z. B. senkrechte Flächen oder dergleichen, möglich.

Eine andere Ausführungsform der vorliegenden Erfindung kann vorsehen, dass die zweite Reibfläche zur formschlüssigen Drehmomentübertragung z. B. als axial verzahnte Fläche ausgebildet ist. Durch die Verzahnung kann eine formschlüssige Verbindung zwischen dem Dämpferkäfig und der Nabe erreicht werden. Beispielsweise kann diese formschlüssige Verbindung nach dem Ratschenprinzip ausgelegt werden, so dass beispielsweise eine Drehrichtung als Freilauf ausgebildet ist.

Zum Aufbringen einer vorbestimmten Vorspannkraft auf die Tellerfeder kann gemäß einer nächsten Weiterbildung der vorliegenden Erfindung vorgesehen sein, dass die Tellerfeder in axialer Richtung durch eine Stützscheibe und einen Sicherungsring gestützt ist. Somit kann die auf die Tellerfeder wirkende Axialkraft durch die Stützscheibe und den Sicherungsring aufgenommen werden. Auf diese Weise wird der Reibring mit dem Dämpferkäfig kraftschlüssig gekoppelt, wobei der Reibring selbst bevorzugt formschlüssig mit der Nabe verbunden ist. Es ist denkbar, dass die Stützscheibe und/oder auch der Sicherungsring durch eine alternative Axialsicherung, wie z. B. durch eine Verstemmung oder dergleichen, ersetzt werden kann.

Bei der Verwendung eines Riementriebs kann das Triebrad als Riemenscheibe ausgebildet sein. Vorzugsweise kann die Riemenscheibe über ein Gleitlager oder ein Wälzlager auf der Nabe zentriert gelagert sein. Es sind auch andere Zentrierungsmöglichkeiten einsetzbar.

Vorzugsweise kann die Riemenscheibe und der Dämpferkäfig als Federführungselemente, welche über die Federelemente, wie z. B. Bogenfedem oder Druckfedern, miteinander gekoppelt sind, aus einem fäserverstärktem Kunststoff oder dergleichen gefertigt sein. Durch entsprechende Anschläge an der Riemenscheibe kann der Verdrehwinkel des Bogenfederdämpfers mit den in den Aufnahmen in dem Dämpferkäfig vorgesehenen Bogenfedern begrenzt werden. Um einen besonders kostengünstigen Bogenfederdämpfer herzustellen, können die Federführungselemente auch einen Trockenschmierstoff enthalten, so dass eine z. B. bei einer Fettschmierung erforderliche Abdichtung entfallen kann. Als Trockenschmierstoff kann vorzugsweise PTFE oder dergleichen verwendet werden.

Um die Anordnung gegen Umwelteinflüsse zu'schützen, kann gemäß einer nächsten Ausgestaltung der vorliegenden Erfindung vorgesehen sein, dass zumindest ein Dichtelement verwendet wird: Beispielsweise kann zur Abdichtung des Bogenfederdämpfers eine Abdeckkappe oder dergleichen als Dichtelement verwendet werden. Es ist auch denkbar, dass als Dichtelement eine Spaltdichtung oder eine Labyrinthdichtung im Bereich der Anschläge an dem Triebrad bzw. der Riemenscheibe vorgesehen ist. Ebenso ist die Verwendung von Radialwellendichtringen, O-Ringen oder dergleichen möglich.

Vorteilhafte Ausgestaltungen der Anordnung gemäß der Erfindung sind in den Ansprüchen 2 bis 16 angegeben.

Einer erfindungsgemäßen Ausbildung eines Triebrades liegt auch die Erkenntnis zugrunde, dass kleinere Drehmoment- und Drehzahlschwankungen einfach und Platz sparend durch einen als Federdämpfer wirksamen Federspeicher ausgeglichen und größere Drehmomentschwankungen wirkungsvoll durch eine als Reibungsdämpfer wirksame Rutschkupplung eliminiert werden können.

Die der Erfindung zugrunde liegenden Aufgaben werden daher auch gelöst durch ein Triebrad eines Nebenaggregatezugs eines Verbrennungsmotors, mit einem mit einem Zugmittel in Wirkverbindung stehenden Laufmantel, mit einer mit der Antriebsachse eines Nebenaggregates drehfest verbundenen Nabe, und mit einer zwischen dem Laufmantel und der Nabe wirksam angeordneten Dämpfungseinrichtung zur Verminderung von Drehschwingungen, welches insbesondere dadurch gekennzeichnet ist, dass die Dämpfungseinrichtung eine serielle Anordnung eines Federspeichers und einer Rutschkupplung umfasst, wobei der Federspeicher zwischen dem Laufmantel und einer auf der Nabe drehbar gelagerten Mitnehmerscheibe sowie die Rutschkupplung zwischen der Mitnehmerscheibe und der Nabe wirksam angeordnet sind.

Vorteilhafte Ausgestaltungen des Triebrades gemäß der Erfindung sind in den Ausprüchen 18 bis 26 angegeben.

Durch die serielle Anordnung des Federspeichers und der Rutschkupplung werden kleinere Drehmoment- und Drehzahlschwankungen, die von dem Zugmittel auf den Laufmantel übertragen werden, flexibel ausgeglichen und nur größere Drehmoment- und Drehzahlschwankungen auf die Mitnehmerscheibe und von dort auf die Rutschkupplung übertragen, wo diese durch Reibschlupf ausgeglichen und somit gedämpft werden.

Der Federspeicher ist vorteilhaft aus mehreren Bogenfedern gebildet, die in axial einander gegenüberliegenden halboffenen Ringkammem des Laufmantels und der Mitnehmerscheibe geführt sind, und die an ihren Enden wechselseitig jeweils an einer umfangsseitigen Anschlagfläche eines Mitnahmenockens des Laufmantels und eines Mitnahmenockens der Mitnehmerscheibe antigen.

Hierdurch ergibt sich ein sehr kompakter Aufbau des Federspeichers, der dessen Anordnung innerhalb des Laufmantels ermöglicht. Die Bogenfedern stellen Druckfedern dar, die bei einfacher Anordnung im Zugbetrieb des Triebrades, also bei einer relativen Beschleunigung des Laufmantels gegenüber der Nabe, gespannt und im Schubbetrieb des Triebrades, also bei einer relativen Verzögerung des Laufmantels gegenüber der Nabe, entspannt werden. Dabei ergibt sich eine hohe Funktionssicherheit dadurch, dass die Kraftübertragung auch bei einem Bruch einer Bogenfeder gewährleistet ist, da in diesem Fall die Windungen der Federteile und im Extremfall die Mitnahmenocken aneinander anliegen und somit die Drehmomentübertragung gewährleisten.

Zur Erzielung einer symmetrischen Wirksamkeit ist es jedoch auch möglich, mehrere Federelemente jeweils umfangsseitig wechselweise zwischen dem Laufmantel und der Mitnehmerscheibe wirksam anzuordnen, so dass eine erste Gruppe von Federelementen im Zugbetrieb des Triebrades und eine zweite Gruppe von Federelementen im Schubbetrieb des Triebrades gespannt wird. Dabei kann durch die Verwendung von Federelementen unterschiedlicher Federsteifigkeit in den beiden Gruppen eine gewünschte Asymmetrie der Dämpfungswirkung des Federspeichers erzielt werden.

Die Rutschkupplung weist zweckmäßig einen ringscheibenförmigen Reibring auf, der zwischen einer entsprechenden Reibfläche der Mitnehmerscheibe und einer drehfest und axial abgestützt auf der Nabe befestigten Tellerfeder angeordnet ist. Dabei kann die drehfeste Verbindung der Tellerfeder mit der Nabe einfach und Platz sparend durch mehrere am Innenumfang der Tellerfeder gleichverteilt angeordnete, nach radial innen hervorstehende und in entsprechende Axialnuten der Nabe eingreifende Zähne gebildet werden.

Ebenfalls kann die axiale Abstützung der Tellerfeder auf der Nabe auf einfache Weise durch einen in eine Ringnut der Nabe einsetzbaren Sicherungsring hergestellt werden, wobei zur Verbesserung der Kraftübertragung ein Stützring zwischen der Tellerfeder und dem Sicherungsring angeordnet sein kann.

Das maximal übertragbare Reibmoment der Rutschkupplung ist zweckmäßig auf ein zulässiges Grenzdrehmoment des zugeordneten Nebenaggregates eingestellt, so dass die Rutschkupplung außer als Reibungsdämpfer auch als Sicherheitskupplung zum Schutz des Nebenaggregates und des Nebenaggregatezugs vor einer Überlastung wirksam ist.

Die Mitnehmerscheibe ist kupplungsseitig vorteilhaft topfförmig mit einem zylindrischen Mantel und einem kreisscheibenförmigen Boden ausgebildet, in dessen Innenraum die Rutschkupplung angeordnet und zum Schutz vor eindringendem Wasser und Schmutz zweckmäßig mit einem an den Außenrand des Mantels angrenzenden Deckel verschlossen ist.

Zur weiteren Vereinfachung des Aufbaus und zur Einsparung von Bauraum sind der Laufmantel und die Mitnehmerscheibe erfindungsgemäß auf der Nabe und gegeneinander gleitgelagert. Die Gleitlagerung kann beispielsweise derart ausgeführt sein, dass der Laufmantel und die Mitnehmerscheibe jeweils über eine innere Radiallagerfläche auf der Nabe radial gelagert sind, und der Laufmantel über beidseitig angeordnete Axiallagerflächen gegenüber einem radialen Absatz der Nabe und einer axialen Lagerfläche der Mitnehmerscheibe axial gelagert ist, oder dass der Laufmantel axial beidseitig kegelringförmige Lagerflächen aufweist und zwischen einem kegelringförmigen Absatz der Nabe und einer entsprechenden kegelringförmigen Lagerfläche der Mitnehmerscheibe schwimmend gelagert ist.

Durch die vorbeschriebene Bauweise ergibt sich ein einem Nebenaggregat zugeordnetes Triebrad eines Nebenaggregatezugs, das im Vergleich zu bekannten Ausführungen eine erhöhte Betriebssicherheit und verbesserte Dämpfungseigenschaften aufweist. Des Weiteren ist das erfindungsgemäße Triebrad mit relativ wenigen Bauteilen einfach, kostengünstig, und Platz sparend aufgebaut.

Nachfolgend wird die vorliegende Erfindung anhand der Zeichnungen näher erläutert. Es zeigen:
- Figur 1: eine geschnittene Teilansicht einer möglichen Ausführungsform einer Anordnung zum Dämpfen von Schwingungen an einem Triebrad;
- Figur 2: eine geschnittene Ansicht entlang der Schnittlinie B-B gemäß Figur 1 der erfindungsgemäßen Anordnung;
- Figur 3: eine Explosionsdarstellung der erfindungsgemäßen Anordnung;
- Figur 4: eine geschnittene vergrößerte Teilansicht gemäß Figur 1;
- Figur 5: ein Diagramm mit einem Verlauf des übertragenen Drehmomentes über den Verdrehwinkel α als Kennlinie;
- Figur 6: ein Funktionsschema der erfindungsgemäßen Anordnung;
- Figur 7: eine erste mögliche Variante einer Riemenscheibenlagerung bei der erfindungsgemäßen Anordnung;
- Figur 8: eine zweite mögliche Variante der Riemenscheibenlagerung der erfindungsge- mäßen Anordnung und
- Figur 9: eine bevorzugte Ausführung eines Triebrades eines Nebenaggregatezugs in einer Explosionsdarstellung.

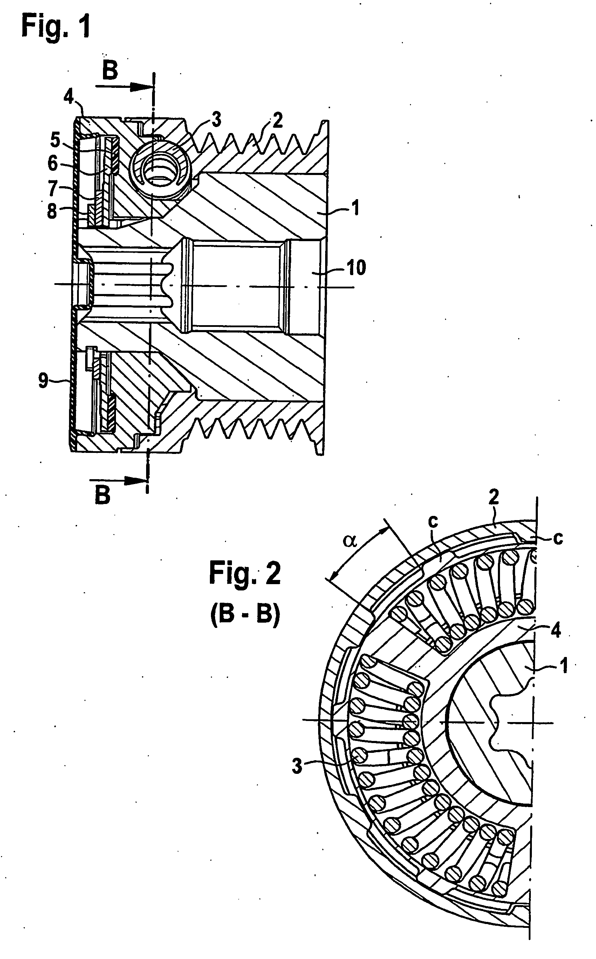

In Figur 1 ist eine mögliche Ausführungsform einer erfindungsgemäßen Anordnung zum Dämpfen von Schwingungen an einem Triebrad zum Antreiben eines nicht weiter dargestellten Nebenaggregats eines Fahrzeuges mit einer Dämpfungseinrichtung gezeigt.

Das bei dieser Ausführungsform als Riemenscheibe 2 ausgebildete Treibrad ist auf einer Nabe 1 gelagert. Die Nabe 1 ist mit der Antriebswelle 10 eines als z. B. Lichtmaschine bzw. Generator ausgebildeten Nebenaggregats eines Verbrennungsmotors verbunden. Die Nabe 1 ist über ein Innengewinde an der Antriebswelle 10 verschraubt, wobei das Anzugsmoment mittels eines Innensechskantes, eines Innensechsrundes oder anderweitig gestalteten Vielzahlverzahnung (z. B. Kerbverzahnung) eingeleitet wird.

Als Dämpfungseinrichtung ist ein mit einer Rutschkupplung kombinierterTorsionsschwingungsdämpfer vorgesehen, der bei der gezeigten Ausführungsform als Bogenfederdämpfer ausgebildet ist. Der Bogenfederdämpfer weist einen Dämpferkäfig 4 auf, wobei die Riemenscheibe 2 und der Dämpferkäfig 4 derart miteinander korrespondieren, dass sie gemeinsam einen Aufnahmeraum für die Bogenfedem 3 bilden. Der Dämpferkäfig 4 weist über den Umfang verteilt Aufnahmebereiche für die Bogenfedem 3 auf, wobei durch korrespondierende Anschläge C sowohl an dem Dämpferkäfig 4 als auch an der Riemenscheibe 2 ein vorbestimmter Verdrehwinkel α vorgegeben wird, wie dies in Figur 2 dargestellt ist.

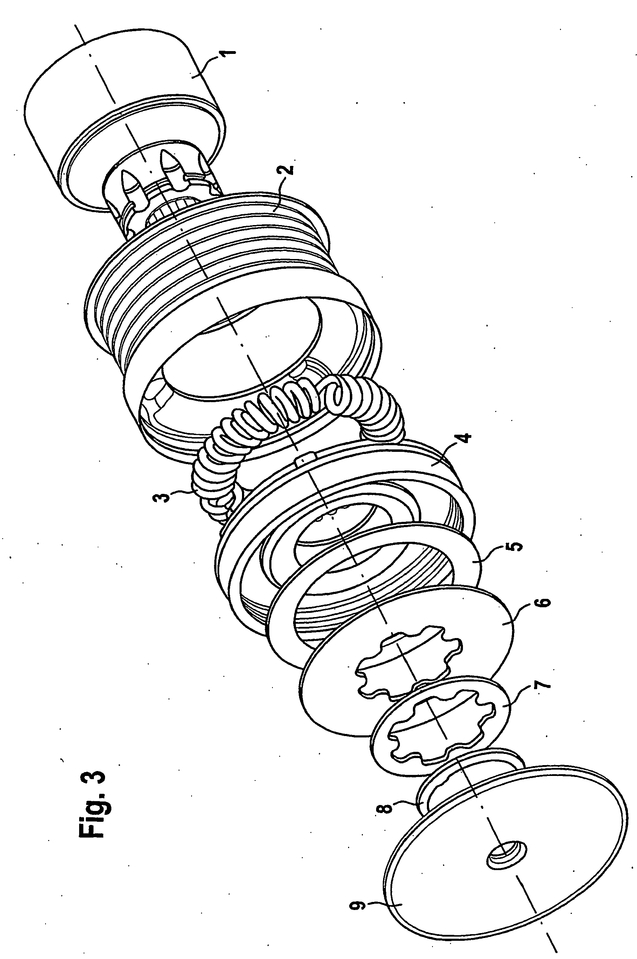

Insbesondere aus der Explosionsdarstellung der erfindungsgemäßen Anordnung in Figur 3 wird der Aufbau der Anordnung verdeutlicht. Die mit der Antriebswelle 10 des Nebenaggregats verschraubte Nabe 1 nimmt die zentrierte Riemenscheibe 2 verdrehbar auf, wobei die Riemenscheibe 2 zur Aufnahme eines Riemens oder dergleichen Zugmittel zum Koppeln mit dem Kurbelwellenantrieb des Verbrennungsmotors vorgesehen ist. Die Riemenscheibe 2 bildet mit dem Dämpferkäfig 4 einen Aufnahmebereich für die Bogenfedern 3 des Bogenfederdämpfers. Die Nabe 1 ist formschlüssig und somit drehfest mit der Tellerfeder 6 verbunden, wobei zwischen der Tellerfeder 6 und dem Dämpferkäfig 4 ein Reibring 5 vorgesehen ist. Die Tellerfeder 6 wird über eine Stützscheibe 7, welche ebenfalls drehfest über eine formschlüssige Verbindung mit der Nabe 1 verbunden ist, und einem Sicherungsring 8 axial verspannt. Die formschlüssige Verbindung der Tellerfeder 6 und der Stützscheibe 7 wird durch eine Außenverzahnung an der Nabe 1 realisiert. Zum Schutz vor Umwelteinflüssen wird als axialer Abschluss eine Schutzkappe 9 bzw..Abdeckkappe 9 verwendet.

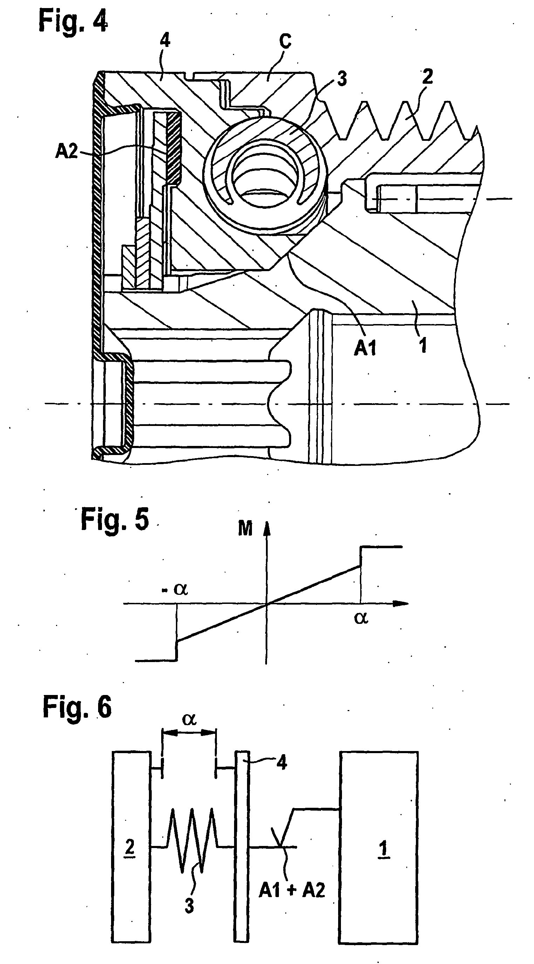

In Figur 4 ist eine vergrößerte geschnittene Teilansicht gemäß Figur 1 gezeigt, aus der die Funktionsweise der erfindungsgemäßen Anordnung ersichtlich ist. Der Dämpferkäfig 4 steht Ober eine erste Reibfläche A1, welche erfindungsgemäß is kegelfläche bei der gezeigten Ausführungsform ausgebildet ist, mit der Nabe 1 in kraftschlüssiger Verbindung, wobei auch eine formschlüssige Verbindung zwischen dem Dämpferkäfig 4 und der Nabe 1 beispielsweise in Form eines Ratschenprinzip möglich ist. Damit der Dämpferkäfig 4 als Rutschkupplungselement dienen kann, wird der Dämpferkäfig 4 über eine zweite Reibfläche A2 gegen die Nabe 1 über die erste Reibfläche A1 verspannt. Dazu wird die Tellerfeder 6 kraftschlüssig mit dem Reibring 5 als Reibfläche A2 gegen den Dämpferkäfig 4 axial gepresst. Auf diese Weise kann bei einer vorbestimmten Schwingungsamplitude die Drehmomentübertragung durch die Überlast-Rutschkupplung zeitweise reduziert bzw. unterbrochen werden, so dass die Schwingungen nicht an das Nebenaggregat übertragen werden. Der Verdrehwinkel a der Bogenfedem 3 wird durch die Anschläge C begrenzt, die nur die Differenz von Federanschlagmoment und Rutschmoment der Rutschkupplung übertragen müssen. Dabei sind sowohl symmetrische als auch asymmetrische Verdrehwinkel a möglich.

Die daraus resultierende Kennlinie bei der Drehmomentübertragung der erfindungsgemäßen Anordnung wird in dem Diagramm gemäß Figur 5 verdeutlicht. Des Weiteren wird das Funktionsprinzip durch das Funktionsschema gemäß Figur 6 dargestellt. Daraus ist ersichtlich, dass die Riemenscheibe 2 über die Bogenfedem 3 in Abhängigkeit des gewählten. Verdrehwinkels α mit dem Dämpferkäfig 4 gekoppelt sind, wobei der Dämpferkäfig 4 als Rutschkupplungselement wiederum über die Reibflächen A1 und A2 mit der Nabe 1 zur Drehmomentübertragung gekoppelt ist.

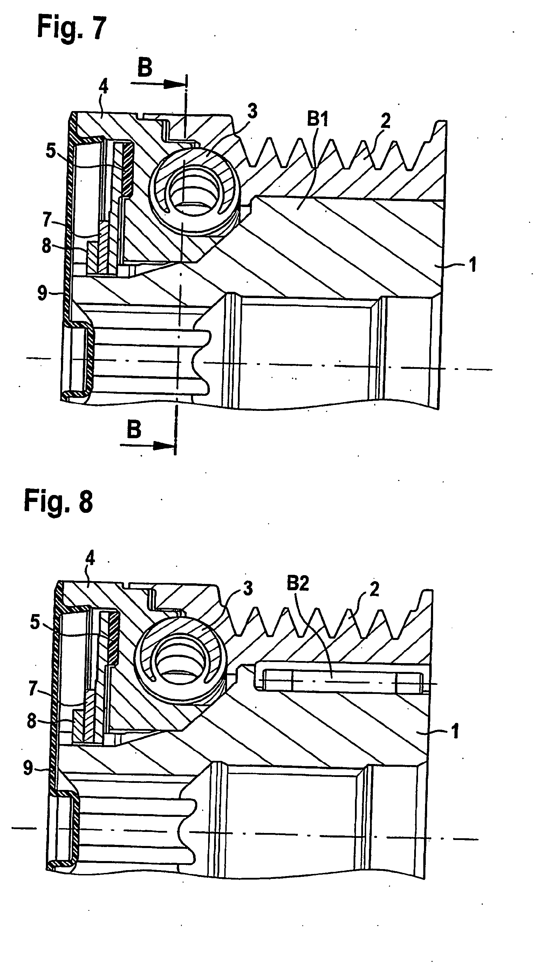

In den Figuren 7 und 8 sind zwei unterschiedliche alternative Ausgestaltungsmöglichkeiten der Lagerung der Riemenscheibe 2 auf der Nabe 1 gezeigt. Gemäß Figur 7 wird die Riemenscheibe über eine spezielle Gleitlagerung B1 zentriert und auf der Nabe 1 drehbar gelagert. In Figur 8 ist eine zweite Variante dargestellt, bei der die Riemenscheibe 2 über ein Wälzlager B2 auf der Nabe 1 zentriert und gelagert ist.

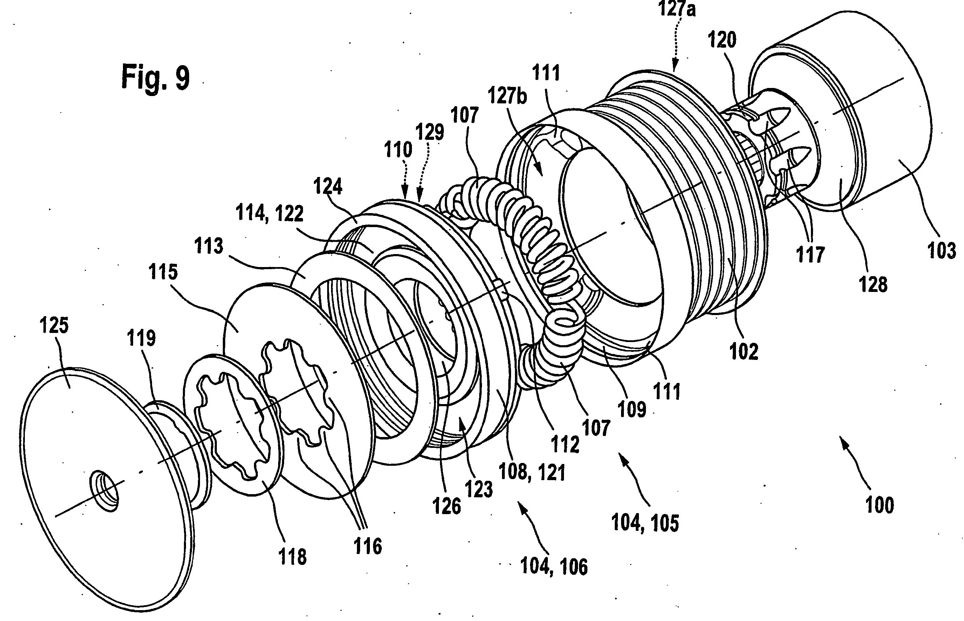

Ein einem Nebenaggregat, beispielsweise einem Generator, zugeordnetes Triebrad 101 (Fig. 9) eines Nebenaggregatezugs umfasst einen mit einem Zugmittel in Wirkverbindung stehenden Laufmantel 102, eine mit der Antriebsachse des Nebenaggregates drehfest verbundene Nabe 103 und eine zwischen dem Laufmantel 102 und der Nabe 103 wirksam angeordnete Dämpfungseinrichtung 104 zur Verminderung von Drehschwingungen.

Der Laufmantel 102 weist an seinem Außenumfang eine an das verwendete Zugmittel angepasste Kontur auf, wobei vorliegend ein Keilrippenriemen als Zugmittel vorgesehen ist. Die Dämpfungseinrichtung 104 wird aus einer seriellen Anordnung eines Federspeichers 105 und einer Rutschkupplung 106 gebildet. Der Federspeicher 105 umfasst mehrere Bogenfedem 107, die zwischen dem Laufmantel 102 und einer auf der Nabe 103 drehbar gelagerten Mitnehmerscheibe 108 angeordnet sind, die in axial einander gegenüberliegenden halboffenen Ringkammem 109, 110 des Laufmantels 102 und der Mitnehmerscheibe 108 geführt sind, und die an ihren Enden wechselseitig jeweils an einer umfangsseitigen Anschlagfläche eines Mitnahmenockens 111 des Laufmantels 102 und eines Mitnahmenockens 112 der Mitnehmerscheibe 108 anliegen.

Die Rutschkupplung 106 ist auf der dem Federspeicher 105 axial abgewandten Seite zwischen der Mitnehmerscheibe 108 und der Nabe 103 angeordnet und weist einen ringscheibenförmigen Reibring 113 auf, der zwischen einer Reibfläche 114 der Mitnehmerscheibe 108 und einer Tellerfeder 115 angeordnet ist. Die Tellerfeder 115 ist über mehrere an ihrem Innenumfang gleichverteilt angeordnete und nach radial innen hervorstehende Zähne 116, die zum Eingriff in entsprechende Axialnuten 117 der Nabe 103 vorgesehen sind, und über einen Stützring 118 und einen Sicherungsring 119, der zum Eingriff in eine Ringnut 120 der Nabe 103 vorgesehen ist, drehfest und axial abgestützt auf der Nabe 103 befestigt.

Die Mitnehmerscheibe 108 ist topfförmig ausgebildet und nimmt die Rutschkupplung 106 in dem durch den zylindrischen Mantel 121 und den kreisscheibenförmigen Boden 122 begrenzten Innenraum 123 auf, der zum Schutz vor eindringendem Schmutz und Wasser mit einem an den Außenrand 124 des Mantels 121 angrenzenden Deckel 125 verschlossen ist.

Während die Mitnehmerscheibe 108 über eine innere Radiallagerfläche 126 radial auf der Nabe 103 gelagert ist, weist der Laufmantel 102 axial beidseitig kegelringförmige Lagerflächen 127a und 127b auf, über die dieser zwischen einem entsprechenden kegelringförmigen Absatz 128 der Nabe 103 und einer entsprechenden kegelringförmigen Lagerfläche 129 der Mitnehmerscheibe 108 schwimmend gelagert ist.

Kleinere von dem Zugmittel auf den Laufmantel 102 übertragene Drehzahl- und Drehmomentschwankungen werden von dem als Federdämpfer wirksamen Federspeicher 105 gedämpft und somit von der Nabe 103 und dem damit verbundenen Nebenaggregat ferngehalten. Bei größeren Drehzahl- und Drehmomentspitzen gerät die als Reibungsdämpfer wirksame Rutschkupplung 106 kurzzeitig in Schlupfbetrieb, so dass das Nebenaggregat auf diesem Weg vor derartigen Belastungsspitzen geschützt ist und ein trägheitsbedingtes Durchrutschen des Zugmittels auf dem Laufmantel 102 zuverlässig verhindert wird. Dabei ist das erfindungsgemäße Triebrad 101 mit relativ wenigen Bauteilen besonders einfach und kompakt aufgebaut.

### Bezugszeichenliste

- 1.: Nabe
- 2.: Riemenscheibe
- 3.: Bogenfedem
- 4.: Dämpferkäfig
- 5.: Reibring
- 6.: Tellerfeder
- 7.: Stützscheibe
- 8.: Sicherungsring
- 9.: Abdeckkappe Antriebswelle
- 101: Triebrad
- 102: Laufmantel
- 103: Nabe
- 104: Dämpfungseinrichtung
- 105: Federspeicher
- 106: Rutschkupplung
- 107: Bogenfeder, Federelement
- 108: Mitnehmerscheibe
- 109: Ringkammer
- 110: Ringkammer
- 111: Mitnahmenocken
- 112: Mitnahmenocken
- 113: Reibring
- 114: Reibfläche
- 115: Tellerfeder
- 116: Zahn
- 117: Axialnut
- 118: Stützring
- 119: Sicherungsring
- 120: Ringnut
- 121: Mantel
- 122: Boden
- 123: Innenraum
- 124: Außenrand
- 125: Deckel
- 126: Radiallagerfläche
- 127a: Lagerfläche
- 127b: Lagerfläche
- 128: Absatz
- 129: Lagerfläche

## Patentansprüche

1. Anordnung zum Dämpfen von Schwingungen mit einer Dämpfungseinrichtung an einem auf einer Nabe gelagerten Triebrad, wobei die Nabe (1) mit einer Antriebswelle (10) eines Nebenaggregats verbunden ist, und wobei als Dämpfungseinrichung ein mit einer Rutschkupplung kombinierter Torsionsschwingungsdämpfer vorgesehen ist, **dadurch gekennzeichnet, dass** das Triebrad und der Dämpferkäfig (4) des Torsionsschwingungsdämpfers wenigstens einen Aufnahmebereich für die Federelemente des Torsionsschwingungsdämpfers bilden, wobei der Dämpferkäfig (4) mit der Nabe (1) kraftschlüssig und/oder formschlüssig gekoppelt ist, so dass eine vorbestimmte Drehmomentübetragung vom Triebrad über den Dämpferkäfig (4) auf die Nabe (1) vorgesehen ist , wobei der Dämpferkäfig (4) axial über eine erste Reibfläche (A1) gegen die Nabe (1) pressbar ist, wobei die erste Reibfläche (A1) als Kegelfläche ausgebildet ist.

2. Anordnung nach Anspruch 1, **dadurch gekennzeichnet, dass** als Torsionsschwingungsdämpfer ein ohne Schmiermittel arbeitender Bogenfederdämpfer vorgesehen Ist, wobei der Verdrehwinkel (α) der Bogenfedern (3) durch Anschläge (C) begrenzt ist.

3. Anordnung nach Anspruch 1 oder 2. **dadurch gekennzeichnet, dass** der Dämpferkäfig (4) als ein in zumindest eine Drehrichtung des Triebrades wirkendes Rutschkupplungselement zum Aufnehmen von Schwingungsamplituden bei der Drehmomentübertragung ausgebildet ist.

4. Anordnung nach einem der Anspruche 1 bis 3, **dadurch gekennzeichnet,dass** der Dämpferkäfig (4) über eine Tellerfeder (6) als zweite Reibfläche (A2) gegen die Nabe (1) spannbar ist

5. Anordnung nach Anspruch 4, **dadurch gekennzeichnet dass** die Teilerfeder (6) drehfest mit der Nabe (1) verbunden ist.

6. Anordnung nach Anspruch 4 oder 5, **dadurch gekennzeichnet, dass** In axialer Richtung zwischen der Tellerfeder (6) und dem Dämpferkäfig (4) als zweite Reibflächen (A2) ein Relbring (5) vorgesehen ist.

7. Anordnung nach Anspruch 6, **dadurch gekennzeichnet, dass** der Reibring (5) auf den Dämpferkäfig (4) aufgespritzt ist.

8. Anordnung nach einem der Ansprüche 1 bis 7, **dadurch gekennzeichnet, dass** die erste Reibfläche (A1) zur formschlüssigen Drehmomentübertragung als axial verzahnte Fläche ausgebildet ist.

9. Anordnung nach einem der Ansprüche 4 bis 8, **dadurch gekennzeichnet, dass** die Tellerfeder (6) in axialer Richtung durch eine Stützscheibe (7) und einen Sicherungsring (8) gestützt ist.

10. Anordnung nach einem der vorangehenden Ansprüche, **dadurch gekennzeichnet, dass** das Triebrad als Riemenscheibe (2) ausgebildet ist

11. Anordnung nach Anspruch 10, **dadurch gekennzeichnet, dass** die Riemenscheibe (2) über ein Gleitlager (B1) oder ein Wälzlager (82) auf der Nabe (1) zentrierbar ist

12. Anordnung nach Anspruch 10 oder 11, **dadurch gekennzeichnet, dass** die Riemenscheibe (2) und der Dämpferkäfig (4) als Federführungselemente des Torsionsschwingungsdämpfers aus einem faserverstärkten Kunststoff gefertigt sind.

13. Anordnung nach Anspruch 12, **dadurch gekennzeichnet, dass** der faserverstände Kunststoff einen Trockenschmierstoff enthält

14. Anordnung nach einem der vorangehenden Ansprüche, **dadurch gekennzeichnet, dass** zumindest ein Dichtelement vorgesehen ist

15. Anordnung nach Anspruch 14, **dadurch gekennzeichnet, dass** als Dichtelement eine Abdeckkappe (9) vorgesehen ist

16. Anordnung nach Anspruch 14 oder 15, **dadurch gekennzeichnet, dass** als Dichtelement eine Spaltdichtung oder eine Labyrinthdichtung Im Bereich der Anschläge (C) vorgesehen ist

17. Triebrad eines Nebenaggregatezugs eines Verbrennungsmotors, mit einem mit einem Zugmittel in Wirkverbindung stehenden Laufmantel (102), mit einer mit der Antriebsachse eines Nebenaggregates drehfest verbundenen Nabe (103), und mit einer zwischen dem Laufmantel (102) und der Nabe (103) wirksam angeordneten Dämpfungseinrichtung zur Verminderung von Drehschwingungen, wobei die Dämpfungseinrichtung (104) eine serielle Anordnung eines Federspeichers (105) und einer Rutschkupplung (106) umfasst, wobei der Federspeicher (105) zwischen dem Laufmantel (102) und einer auf der Nabe (103) drehbar gelagerten Mitnehmerscheibe (108) sowie die Rutschkupplung (106) zwischen der Mitnehmerscheibe (108) und der Nabe (103) wirksam angeordnet sind, wobei der Laufmantel (102) und die Mitnehmerscheibe (108) gegeneinander und auf der Nabe (103) gleitgelagert sind, wobei derLaufmantel (102) axial beidseitig kegelringfönmige Lagerflächen (127a, 127b) aufweist und zwischen einem kegelringförmigen Absatz (128) der Nabe (103) und einer entsprechenden kegelringförmigen Lagerfläche (129) der Mitnehmerscheibe (108) schwimmend gelagert ist.

18. Triebrad nach Anspruch 17, **dadurch gekennzeichnet, dass** der Federspeicher (105) mindestens eine Bogenfeder (107) aufweist, die In axial einander gegenüberliegenden halboffenen Ringkammem (109, 110) des Laufmantels (102) und der Mitnehmerscheibe (108) geführt ist, und die an ihren Enden wechselseitig jeweils an einer umfangsseitigen Anschlagfläche eines Mitnahmenockens (111) des Laufmantels (102) und eines Mit nahmenockens (112) der Mitnehmerscheibe (108) anliegt

19. Triebrad nach Anspruch 17 oder 18, **dadurch gekennzeichnet, dass** der Federspeicher (105) mehrere Federelemente (107) aufweist die jeweils umfangsseitig wechselweise zwischen dem Laufmantel (102) und der Mitnehmerscheibe (108) wirksam angeordnet sind.

20. Triebrad nach einem der Ansprüche 17 bis 19, **dadurch gekennzeichnet, dass** die Rutschkupplung (106) einen ringscheibenförmigen Reibring (113) aufweist, der zwischen einer entsprechenden Reibfläche (114) der Mitnehmerscheibe (108) und einer drehfest und axial abgestützt auf der Nabe befestigten Tellerfeder (115) angeordnet Ist

21. Triebrad nach Anspruch 20, **dadurch gekennzeichnet, dass** die Tellerfeder (115) an ihrem innenumfang mehrere gleichverteilt angeordnete und nach radial innen hervorstehende Zähne (116) aufweist, die zum Eingriff in entsprechende Axialnuten (117) der Nabe (103) vorgesehen sind.

22. Triebrad nach Anspruch 20, oder 21, **dadurch gekennzeichnet, dass** ein in eine Ringnut (20) der Nabe (3) elnsetzbarer Sicherungsring (19) zur axialen Abstützung der Tellerfeder (15) vorgesehen ist.

23. Triebrad nach zumindest einem der Ansprüche 17 bis 22, **dadurch gekennzeichnet, dass** das maximal Obertragbare Relbmoment der Rutschkupplung (106) auf ein zulässiges Grenzdrehmoment des zugeordneten Nebanaggregates eingestellt ist.

24. Triebrad nach zumindest einem der Ansprüche 17 bis 23, **dadurch gekennzeichnet, dass** die Mitnehmerscheibe (108) topfförmig mit einem zylindrischen Mantel (121) und einem kreisscheibenförmigen Boden (122) ausgebildet ist, und dass die Rutschkupplung (106) innerhalb des durch den Mantel (121) und den Boden (122) begrenzten Innenraums (123) der Mitnehmerscheibe (108) angeordnet ist.

25. Triebrad nach Anspruch 24, **dadurch gekennzeichnet, dass** der Innenraum (123) der Mitnehmerscheibe (108) mit einem an den Außenrand (124) des Mantels (121) angrenzenden Deckel (125) verschlossen ist.

26. Triebrad nach einem der Ansprüche 17 bis 25, **dadurch gekennzeichnet, dass** der Laufmantel (102) und die Mitnehmerscheibe (108) jeweils Ober eine innere Radiallagerfläche (126) auf der Nabe (103) radial gelagert sind, und der Laufmantel (102) Ober beidseitig angeordnete Axiallagerflächen (127a, 127b) gegenüber einem radialen Absatz (128) der Nabe (103) und einer axialen Lagerfläche (129) der Mitnehmerscheibe (108) axial gelagert ist.

## Claims

1. Arrangement for the damping of vibrations, with a damping device on a driving wheel mounted on a hub, the hub (1) being connected to a driveshaft (10) of a secondary assembly, and the damping device provided being a torsional vibration damper combined with a slipping clutch, **characterized in that** the driving wheel and the damper cage (4) of the torsional vibration damper form at least one reception region for the spring elements of the torsional vibration damper, the damper cage (4) being coupled non-positively and/or positively to the hub (1), so that predetermined torque transmission from the driving wheel via the damper cage (4) to the hub (1) is provided, the damper cage (4) being capable of being pressed axially against the hub (1) via a first frictional surface (A1), the first frictional surface (A1) being designed as a conical surface.

2. Arrangement according to Claim 1, **characterized in that** the torsional vibration damper provided is a bowspring damper operating without lubricant, the rotary angle (α) of the bow springs (3) being limited by stops (C).

3. Arrangement according to Claim 1 or 2, **characterized in that** the damper cage (4) is designed as a slipping-clutch element, acting in at least one direction of rotation of the driving wheel, for the absorption of vibration amplitudes during torque transmission.

4. Arrangement according to one of Claims 1 to 3, **characterized in that** the damper cage (4) can be tensioned against the hub (1) via a cup spring (6) as a second frictional surface (A2).

5. Arrangement according to Claim 4, **characterized in that** the cup spring (6) is connected fixedly in terms of rotation to the hub (1).

6. Arrangement according to Claim 4 or 5, **characterized in that** a friction ring (5) is provided as a second frictional surface (A2) in the axial direction between the cup spring (6) and the damper cage (4).

7. Arrangement according to Claim 6, **characterized in that** the friction ring (5) is injection-moulded onto the damper cage (4).

8. Arrangement according to one of Claims 1 to 7, **characterized in that** the first frictional surface (A1) for positive torque transmission is designed as an axially toothed surface.

9. Arrangement according to one of Claims 4 to 8, **characterized in that** the cup spring (6) is supported in the axial direction by a supporting washer (7) and a securing ring (8).

10. Arrangement according to one of the preceding claims, **characterized in that** the driving wheel is designed as a belt pulley (2).

11. Arrangement according to Claim 10, **characterized in that** the belt pulley (2) can be centred on the hub (1) via a plain bearing (B1) or a rolling bearing (B2).

12. Arrangement according to Claim 10 or 11, **characterized in that** the belt pulley (2) and the damper cage (4) are manufactured, as spring guide elements of the torsional vibration damper, from a fibre-reinforced plastic.

13. Arrangement according to Claim 12, **characterized in that** the fibre-reinforced plastic contains a dry lubricant.

14. Arrangement according to one of the preceding claims, **characterized in that** at least one sealing element is provided.

15. Arrangement according to Claim 14, **characterized in that** the sealing element provided is a covering cap (9).

16. Arrangement according to Claim 14 or 15, **characterized in that** the sealing element provided is a gap seal or a labyrinth seal in the region of the stops (C).

17. Driving wheel of a secondary assembly train of an internal combustion engine, with a running casing (102) operatively connected to a traction means, with a hub (103) connected fixedly in terms of rotation to the driveshaft of a secondary assembly, and with a damping device, arranged actively between the running casing (102) and the hub (103), for the reduction of torsional vibrations, the damping device (104) comprising a serial arrangement of a spring accumulator (105) and of a slipping clutch (106), the spring accumulator (105) being arranged actively between the running casing (102) and a driver disc (108) mounted rotatably on the hub (103), and the slipping clutch (106) being arranged actively between the driver disc (108) and the hub (103), the running casing (102) and the driver disc (108) being mounted by means of plain bearings with respect to one another and on the hub (103), the running casing (102) having axially on both sides bearing surfaces (127a, 127b) in the form of a conical ring and being mounted floatingly between a step (128), in the form of a conical ring, of the hub (103) and a corresponding bearing surface (129), in the form of a conical ring, of the driver disc (108).

18. Driving wheel according to Claim 17, **characterized in that** the spring accumulator (105) has at least one bow spring (107) which is guided in axially mutually opposite half-open annular chambers (109, 110) of the running casing (102) and of the driver disc (108) and which bears alternately at each of its ends against a circumferential stop surface of a take-up cam (111) of the running casing (102) and of a take-up cam (112) of the driver disc (108).

19. Driving wheel according to Claim 17 or 18, **characterized in that** the spring accumulator (105) has a plurality of spring elements (107) which are each actively arranged circumferentially alternately between the running casing (102) and the driver disc (108).

20. Driving wheel according to one of Claims 17 to 19, **characterized in that** the slipping clutch (106) has a friction ring (113) in the form of an annular washer, which is arranged between a corresponding frictional surface (114) of the driver disc (108) and a cup spring (115) fastened fixedly in terms of rotation, and supported axially, on the hub.

21. Driving wheel according to Claim 20, **characterized in that** the cup spring (115) has on its inner circumference a plurality of radially inward-projecting teeth (116) which are arranged in an equal distribution and which are intended to engage into corresponding axial grooves (117) of the hub (103).

22. Driving wheel according to Claim 20 or 21, **characterized in that** a securing ring (19) which can be inserted into an annular groove (20) of the hub (3) is provided for the axial support of the cup spring (15).

23. Driving wheel according to at least one of Claims 17 to 22, **characterized in that** the maximum transmittable moment of friction of the slipping clutch (106) is set at a permissible limiting torque of the assigned secondary assembly.

24. Driving wheel according to at least one of Claims 17 to 23, **characterized in that** the driver disc (108) is of pot-shaped design with a cylindrical casing (121) and with a bottom (122) in the form of a circular disc, and **in that** the slipping clutch (106) is arranged within the inner space (123), delimited by the casing (121) and the bottom (122), of the driver disc (108).

25. Driving wheel according to Claim 24, **characterized in that** the inner space (123) of the driver disc (108) is closed by means of a cover (125), contiguous to the outer margin (124) of the casing (121).

26. Driving wheel according to one of Claims 17 to 25, **characterized in that** the running casing (102) and the driving disc (108) are each mounted radially on the hub (103) via an inner radial bearing surface (126), and the running casing (102) is mounted axially, via axial bearing surfaces (127a, 127b) arranged on both sides, with respect to a radial step (128) of the hub (103) and an axial bearing surface (129) of the driver disc (108).

## Revendications

1. Système pour amortir des vibrations avec un dispositif d'amortissement placé au niveau d'une roue motrice disposée sur un moyeu, le moyeu (1) étant relié à un arbre d'entraînement (10) d'un sous-groupe et un amortisseur de vibrations en torsion combiné à un embrayage à friction servant de dispositif d'amortissement, la roue motrice et la cage d'amortissement (4) de l'amortisseur de vibrations en torsion formant au moins une zone d'absorption pour les éléments de ressort de l'amortisseur de vibrations en torsion, la cage d'amortissement (4) étant couplée au moyeu (1) par complémentarité de forces et/ou par complémentarité de formes, de sorte qu'une transmission de couple prédéfinie est prévue de la roue motrice au moyeu (1) en passant par la cage d'amortissement (4), la cage d'amortissement (4) pouvant être comprimée dans le plan axial contre le moyeu (1) par l'intermédiaire d'une première surface de frottement (A1), la première surface de frottement (A1) prenant la forme d'une surface conique.

2. Système selon la revendication 1, **caractérisé en ce que** l'amortisseur de vibrations en torsion est un amortisseur par ressort arqué travaillant sans lubrifiant, l'angle de torsion (α) des ressorts arqués (3) étant délimité par les butées (C).

3. Système selon la revendication 1 ou 2, **caractérisé en ce que** la cage d'amortissement (4) prend la forme d'un élément d'embrayage à friction agissant dans au moins un sens de rotation de la roue motrice pour absorber des amplitudes de vibrations lors de la transmission de couple.

4. Système selon l'une quelconque des revendications 1 à 3, **caractérisé en ce que** la cage d'amortissement (4) peut être serrée contre le moyeu (1) par l'intermédiaire d'un ressort Belleville (6) servant de deuxième surface de frottement (A2).

5. Système selon la revendication 4, **caractérisé en ce que** le ressort Belleville (6) est relié fixement sans rotation au moyeu (1).

6. Système selon la revendication 4 ou 5, **caractérisé en ce qu'**une bague de frottement (5) servant de deuxième surface de frottement (A2) est prévue dans la direction axiale entre le ressort Belleville (6) et la cage d'amortissement (4).

7. Système selon la revendication 6, **caractérisé en ce que** la bague de frottement (5) est appliquée au pistolet sur la cage d'amortissement (4).

8. Système selon l'une quelconque des revendications 1 à 7, **caractérisé en ce que** la première surface de frottement (A1) est réalisée sous la forme d'une surface dentée dans le plan axial pour la transmission de couple par complémentarité de formes.

9. Système selon l'une quelconque des revendications 4 à 8, **caractérisé en ce que** le ressort Belleville (6) est soutenu dans la direction axiale par un disque de soutien (7) et une bague de fixation (8).

10. Système selon l'une quelconque des revendications précédentes, **caractérisé en ce que** la roue motrice prend la forme d'une poulie (2).

11. Système selon la revendication 10, **caractérisé en ce que** la poulie (2) peut être centrée sur le moyeu (1) via un palier lisse (B1) ou un roulement à cylindres (B2).

12. Système selon la revendication 10 ou 11, **caractérisé en ce que** la poulie (2) et la cage d'amortissement (4) servant d'éléments de guidage de ressort de l'amortisseur de vibrations en torsion sont fabriquées à partir d'une matière synthétique renforcée en fibres.

13. Système selon la revendication 12, **caractérisé en ce que** la matière synthétique renforcée en fibres contient un lubrifiant sec.

14. Système selon l'une quelconque des revendications précédentes, **caractérisé en ce qu'**au moins un élément d'étanchéité est prévu.

15. Système selon la revendication 14, **caractérisé en ce que** l'élément d'étanchéité est un capuchon de recouvrement (9).

16. Système selon la revendication 14 ou 15, **caractérisé en ce que** l'élément d'étanchéité est un joint fendu ou un joint labyrinthe prévu dans la zone des butées (C).

17. Roue motrice d'un train de sous-groupes d'un moteur à combustion interne, avec un manchon de glissement (102) interagissant avec un moyen de traction, avec un moyeu (103) relié fixement sans rotation avec l'axe d'entraînement d'un sous-groupe et avec un dispositif d'amortissement disposé de façon active entre le manchon de glissement (102) et le moyeu (103) pour réduire les vibrations en rotation, le dispositif d'amortissement (104) comprenant un système en série composé d'un accumulateur à ressort (105) et d'un embrayage à friction (106), l'accumulateur à ressort (105) étant disposé de façon active entre le manchon de glissement (102) et un disque d'entraîneur (108) disposé de façon tournante sur le moyeu (103) et l'embrayage à friction (106) étant disposé de façon active entre le disque d'entraîneur (108) et le moyeu (103), le manchon de glissement (102) et le disque d'entraîneur (108) étant disposés selon un rapport de glissement l'un contre l'autre sur le moyeu (103), le manchon de glissement (102) comportant des deux côtés dans le plan axial des surfaces de palier (127a, 127b) de forme annulaire conique et étant disposée de façon flottante entre un talon (128) de forme annulaire conique du moyeu (103) et une surface de palier (129) de forme annulaire conique correspondante du disque d'entraîneur (108).

18. Roue motrice selon la revendication 17, **caractérisée en ce que** l'accumulateur à ressort (105) comporte au moins un ressort arqué (107) guidé dans des chambres annulaires (109, 110) à demi ouvertes opposées l'une par rapport à l'autre dans le plan axial du manchon de glissement (102) et du disque d'entraîneur (108) et reposant respectivement de façon alternée au niveau de ses extrémités contre une surface de butée située du côté périphérique d'une came d'entraînement (111) du manchon de glissement (102) et une came d'entraînement (112) du disque d'entraîneur (108).

19. Roue motrice selon la revendication 17 ou 18, **caractérisée en ce que** l'accumulateur à ressort (105) comporte plusieurs éléments de ressort (107) respectivement disposés de façon active sur le côté périphérique en alternance entre le manchon de glissement (102) et le disque d'entraîneur (108).

20. Roue motrice selon l'une quelconque des revendications 17 à 19, **caractérisée en ce que** l'embrayage à friction (106) comporte une bague de frottement (113) en forme de disque annulaire disposée entre une surface de frottement (114) correspondante du disque d'entraîneur (108) et un ressort Belleville (115) fixé fixement sans rotation et reposant dans le plan axial sur le moyeu.

21. Roue motrice selon la revendication 20, **caractérisée en ce que** le ressort Belleville (115) comporte au niveau de sa périphérie intérieure plusieurs dents (116) disposées selon une répartition régulière et saillant dans le plan radial vers l'intérieur, lesdites dents étant prévues pour s'engrener dans les rainures axiales (117) correspondantes du moyeu (103).

22. Roue motrice selon la revendication 20 ou 21, **caractérisée en ce qu'**une bague de fixation (19) pouvant être insérée dans une rainure annulaire (20) du moyeu (3) est prévue pour soutenir le ressort Belleville (15) dans le plan axial.

23. Roue motrice selon au moins l'une quelconque des revendications 17 à 22, **caractérisée en ce que** le couple de frottement transmissible maximal de l'embrayage à friction (106) est réglé à un couple limite autorisé du sous-groupe associé.

24. Roue motrice selon au moins l'une quelconque des revendications 17 à 23, **caractérisée en ce que** le disque d'entraîneur (108) prend la forme d'un pot avec un manchon cylindrique (121) et un fond (122) en forme de disque rond et que l'embrayage à friction (106) est disposé à l'intérieur de l'espace intérieur (123) du disque d'entraîneur (108) délimité par le manchon (121) et le fond (122).

25. Roue motrice selon la revendication 24, **caractérisée en ce que** l'espace intérieur (123) du disque d'entraîneur (108) est fermé par un couvercle (125) situé à côté du bord extérieur (124) du manchon (121).

26. Roue motrice selon l'une quelconque des revendications 17 à 25, **caractérisée en ce que** le manchon de glissement (102) et le disque d'entraîneur (108) sont respectivement disposés dans le plan radial sur le moyeu (103) au-dessus d'une surface de palier radial (126) intérieur et que le manchon de glissement (102) est disposé dans le plan axial au-dessus des surfaces de palier axial (127a, 127b) disposées au-dessus par rapport à un talon radial (128) du moyeu (103) et à une surface de palier axiale (129) du disque d'entraîneur (108).
